# EUROPÄISCHE PATENTSCHRIFT

(11) **EP 2 743 015 B1**
(45) Veröffentlichungstag und Bekanntmachung des Hinweises auf die Patenterteilung: **07.11.2018**
(21) Anmeldenummer: 12196460.5
(22) Anmeldetag: 11.12.2012
(51) Int. Cl.: B21J 5/00, B21D 26/14, B21J 5/06

(54) **Umformen von Komponenten aus Gusswerkstoffen**
Reforming of cast elements
Transformation de pièces de fonderie

(43) Veröffentlichungstag der Anmeldung: 18.06.2014
(73) Patentinhaber: GF Casting Solutions AG, 8200 Schaffhausen (CH)
(72) Erfinder: Löhken, Thomas, 78462 Konstanz (DE)
(74) Vertreter: Fenner, Seraina

(56) Entgegenhaltungen:
- EP-A1- 1 380 364
- WO-A1-2011/032691
- DE-A1- 1 752 255
- US-A- 5 730 016
- DATABASE INSPEC [Online] THE INSTITUTION OF ELECTRICAL ENGINEERS, STEVENAGE, GB; LINDHOLM U S ET AL: "Effect of strain rate on yield strength, tensile strength, and elongation of three aluminum alloys", XP002696506, Database accession no. 270645 & JOURNAL OF MATERIALS USA, Bd. 6, Nr. 1, März 1971 (1971-03), Seiten 119-133, ISSN: 0022-2453
- DATABASE INSPEC [Online] THE INSTITUTION OF ELECTRICAL ENGINEERS, STEVENAGE, GB; 2004, "ICHSF 2004 - 1st International Conference on High-Speed Forming", XP002696507, Database accession no. 8097147 & ICHSF 2004 - 1ST INTERNATIONAL CONFERENCE ON HIGH-SPEED FORMING 31 MARCH-1 APRIL 2004 DORTMUND, GERMANY, 2004, 2004 Dortmund, Germany ISBN: 3-00-012970-7

## Beschreibung

Die Erfindung betrifft ein Verfahren zum zerstörungsfreien Umformen einer Komponente aus Gusswerkstoff über die quasistatische Bruchdehnung hinaus.

Das Gießen als Urformverfahren bietet bekanntermaßen große Freiheiten bezüglich Formgebung, Funktionsintegration und Materialauswahl. Im Wesentlich gelangt man in einem einzigen Fertigungsschritt vom Ausgangsmaterial zum Rohprodukt. Trotzdem kann es günstig sein, nachgelagert einen Umformschritt anzuschließen, beispielsweise zur Herstellung von Hinterschneidungen oder der Erzeugung von Klemmverbindungen. Auf Grund der vergleichsweise hohen Sprödigkeit gegossener Materialien sind bis dato keine Ansätze bekannt, Gusskomponenten durch Umformung weiter zu bearbeiten.

Im Allgemeinen erreicht die Bruchdehnung gegossener Materialien nicht die Größenordnung von beispielsweise stranggepressten Produkten. Für die Umformung prädestinierte Materialien zeichnen sich durch Bruchdehnungen aus, die in der Regel 20% überschreiten. Dagegen liegt die Bruchdehnung bei gegossenen Materialien je nach Legierung und Gießverfahren oft nur zwischen 1% (AlSi9Cu3) und 4% (AlSi7Mg). Für eine Umformung sind diese keinesfalls ausreichend und es würde zu Rissen oder Brüchen lange vor Erreichen eines nutzbaren Umformgrades kommen. Deshalb sind derartige Materialien für eine Umformung bis dato nicht geeignet.

Eine denkbare Methode höhere Bruchdehnungen zu erzielen, wäre der Weg über superplastische Formung, welche im Tagungsband LS-Dyna Anwenderforum, Bamberg 2008 offenbart ist. Diese setzt jedoch sowohl extrem geringe Umformraten (≈ 10⁻⁴ s⁻¹) als auch eine starke Erwärmung (> 0.5*Tₘ) voraus. Unter Tₘ ist dabei der Schmelzpunkt des Materials in der absoluten Temperaturskala zu verstehen. Diese Randbedingungen erfordern sowohl lange Prozesszeiten als auch hohen Energieaufwand, was die Anwendung dieser Verfahren oft unwirtschaftlich macht.

Es ist jedoch auch bekannt, dass bei Metallen mit steigender Dehnrate im Umformverfahren meistens auch eine höhere Bruchdehnung einhergeht. Allerdings ist dieser Effekt umso stärker ausgeprägt, je reiner die Materialien vorliegen und nimmt bei Legierungen stark ab [Lindholm, U. S. Journal of Materials 6, 1971 (1)]. Die für werkstoffwissenschaftliche Untersuchungen verwendeten hydraulischen Verfahren [Proceedings of the 1st International Conference on High Speed Forming ICHSF, Dortmund, 2004] oder gar sprengtechnische Ansätze zur Erzeugen hoher Dehnraten sind für eine zerstörungsfreie Umformung in der Serienfertigung kaum geeignet, da diese Verfahren wirtschaftlich nicht in Herstellungsprozesse integrierbar sind.

Es ist die Aufgabe der Erfindung ein Verfahren anzuwenden, welches ein Umformen von Gussmaterialien bei moderaten Temperaturen, die unter 150°C liegen, ermöglicht.

Diese Aufgabe wird erfindungsgemäss dadurch gelöst, dass der Gusswerkstoff mittels der elektromagnetischen Hochgeschwindigkeitsumformung (EMF) umgeformt wird.

Dieses Verfahren, welches Stand der Technik ist wurde bisher insbesondere für Gussmaterialien eingesetzt, da sich Gusswerkstoffe ansonsten nicht zerstörungsfrei umformen lassen, siehe z.B. die gattungsgemäße DE 17 52 255 A1. Diese Offenlegungsschrift offenbart aber nur ein Magneform-Verfahren mit Überschreiten der Bruchdehnung in Bezug auf Aluminiumdruckgussteile.

Das EMF-Verfahren erzeugt einerseits die benötigten sehr hohen Dehnraten, andererseits ist es aber auch flexibel unter Produktionsbedingungen anwendbar.

Die erzeugbaren Dehnraten durch das EMF-Verfahren liegen im Bereich von 100 1/s bis mehrere 10'000 1/s mit weitestgehend isotroper Kraftentwicklung. Optimale Verformungen der Komponenten werden vorzugsweise mit einer Dehnrate über 1000 1/s erreicht wie auch mit einer Dehnrate über 10'0001/s.

Die isotrope Kraftentwicklung ist insofern von großer Bedeutung, als dass andere mechanische Verfahren schnell zur ungleichmäßigen Deformation der Komponenten und damit einem lokalen Versagen der Komponenten bzw. des Materials aus dem die Komponenten hergestellt sind, führen würden.

Eine bevorzugte Ausgestaltung liegt darin einen Gusswerkstoff für die umzuformende Komponente einzusetzen der eine Bruchdehnung von weniger als 20 % aufweist. Komponenten aus solchen Gusswerkstoffen können durch andere Umformverfahren nicht weit genug umgeformt werden, da sie verstärkt zur Rissbildung neigen.

Durch die Umformung der Komponente aus einem Gusswerkstoff wird eine formschlüssige Verbindung mit mindestens einer weiteren Komponente erzielt. Die Komponente, welche aus einer Gusslegierung hergestellt ist, wird beispielweise auf einer weiteren Komponente angeordnet, die nicht aus demselben Werkstoff hergestellt sein muss aber kann. Durch das anschliessende Anwenden des EMF-Verfahrens wird eine formschlüssige Verbindung erzielt, die keinen Stoffschluss verursacht. Das heisst, die beiden Werkstoffe vereinigen sich nicht bzw. gehen nicht ineinander über wie bei einem Schweißvorgang.

Ebenso wird durch die Umformung der Komponente aus einem Gusswerkstoff durch das EMF-Verfahren eine kraftschlüssige Verbindung mit mindestens einer weiteren Komponente erzielt. Nach dem Zusammenführen bspw. durch loses Aufstecken oder Ineinanderstecken der Komponenten wird durch die Anwendung des EMF-Verfahrens eine kraftschlüssige Verbindung ohne einen Stoffschluss zwischen den Komponenten erreicht.

In einer weiteren günstigen Anwendung des EMF-Verfahrens wird eine einzelne gegossene Komponente durch die Umformung in die endgültige Form gebracht. Dadurch kann es zum Beispiel möglich sein Teile herzustellen, die auf Grund von Hinterschneidungen sonst nicht entformbar wären.

Des Weiteren kann das Verfahren auch günstig eingesetzt werden, um eine durch die starke Materialdeformation hervorgerufene lokale Festigkeitssteigerung des Grundmaterials zu nutzen.

Das EMF-Verfahren eignet sich besonders für das Umformen von gegossenen Aluminiumlegierungen wie auch für gegossene Magnesiumlegierungen. Erfindungsgemäß wird das EMF-Verfahren für das Umformen von gegossenen Eisenlegierungen verwendet. Dabei ist es günstig und notwendig, die Umformparameter den spezifischen Werkstoffeigenschaften anzupassen. Dies kann beispielsweise durch die Einstellung des elektromagnetischen Kraft-Zeit-Verlaufes erfolgen welcher im Wesentlichen durch Ladeenergie, Kondensatorkapazitäten und Spuleninduktivität determiniert ist.

Der vorliegenden Erfindung zugrunde liegende Untersuchungen haben gezeigt, dass mit der genannten elektromagnetischen Hochgeschwindigkeitsumformung Dehnungen bis zu 30% bei der Einschnürung von gegossenen Rohren aus beispielsweise AlSi7Mg ohne erkennbare Rissbildung erzielt werden können.

Auch bei anderen Legierungen und Bauformen konnten ähnliche Steigerungen der Dehnwerte nachgewiesen werden. Die Erfindung liegt darin einen Gusswerkstoff aus einer Eisenlegierung gemäß Anspruch 1 umzuformen.

## Patentansprüche

1. Verfahren zum zerstörungsfreien Umformen einer Komponente aus Gusswerkstoff, wobei die Komponente mittels der elektromagnetischen Hochgeschwindigkeitsumformung (EMF) über die quasistatische Bruchdehnung hinaus umgeformt wird, **dadurch gekennzeichnet, dass** der Gusswerkstoff eine Eisenlegierung ist.

2. Verfahren nach Anspruch 1, **dadurch gekennzeichnet, dass** die Dehnrate des EMF-Verfahrens höher als 100 S⁻¹ ist.

3. Verfahren nach Anspruch 1, **dadurch gekennzeichnet, dass** die Dehnrate des EMF-Verfahrens höher als 1000 S⁻¹ ist

4. Verfahren nach Anspruch 1, **dadurch gekennzeichnet, dass** die Dehnrate des EMF-Verfahrens höher als 10000 S⁻¹ ist.

5. Verfahren nach einem der Ansprüche 1 bis 4, **dadurch gekennzeichnet, dass** durch die Umformung der Komponente aus einem Gusswerkstoff eine formschlüssige Verbindung mit mindestens einer weiteren Komponente hergestellt wird.

6. Verfahren nach einem der Ansprüche 1 bis 5, **dadurch gekennzeichnet, dass** durch die Umformung der Komponente aus einem Gusswerkstoff eine kraftschlüssige Verbindung mit mindestens einer weiteren Komponente hergestellt wird.

7. Verfahren nach einem der vorangehenden Ansprüche, **dadurch gekennzeichnet, dass** der Gusswerkstoff eine Bruchdehnung aufweist die geringer ist als 20 %.

8. Verfahren nach einem der vorangehenden Ansprüche, **dadurch gekennzeichnet, dass** der Gusswerkstoff eine Bruchdehnung aufweist die geringer ist als 15 %.

9. Verfahren nach einem der vorangehenden Ansprüche, **dadurch gekennzeichnet, dass** der Gusswerkstoff eine Bruchdehnung aufweist die geringer ist als 10 %.

10. Verfahren nach einem der vorangehenden Ansprüche, **dadurch gekennzeichnet, dass** der Gusswerkstoff eine Bruchdehnung aufweist die geringer ist als 5 %.

11. Verfahren nach einem der vorangehenden Ansprüche, **dadurch gekennzeichnet, dass** die Prozesstemperatur bei der Umformung kleiner als 0.5 * Tₘ des umgeformten Materials ist.

## Claims

1. Method for non-destructively forming a component made of cast material, wherein the component is formed by means of electromagnetic high-speed forming (EMF) beyond the quasistatic elongation at break, **characterized in that** the cast material is an iron alloy.

2. Method according to Claim 1, **characterized in that** the strain rate of the EMF method is higher than 100 S⁻¹.

3. Method according to Claim 1, **characterized in that** the strain rate of the EMF method is higher than 1000 S⁻¹.

4. Method according to Claim 1, **characterized in that** the strain rate of the EMF method is higher than 10 000 S⁻¹.

5. Method according to one of Claims 1 to 4, **characterized in that** a form-fitting connection to at least one further component is made by the forming of the component made of a cast material.

6. Method according to one of Claims 1 to 5, **characterized in that** a force-fitting connection to at least one further component is made by the forming of the component made of a cast material.

7. Method according to one of the preceding claims, **characterized in that** the cast material has an elongation at break of less than 20%.

8. Method according to one of the preceding claims, **characterized in that** the cast material has an elongation at break of less than 15%.

9. Method according to one of the preceding claims, **characterized in that** the cast material has an elongation at break of less than 10%.

10. Method according to one of the preceding claims, **characterized in that** the cast material has an elongation at break of less than 5%.

11. Method according to one of the preceding claims, **characterized in that** the process temperature for the forming is less than 0.5 * Tₘ of the formed material.

## Revendications

1. Procédé de formage non destructif d'un composant en matériau de moulage, le composant étant façonné au moyen du magnétoformage à grande vitesse (EMF) au-delà de l'allongement à la rupture quasi-statique, **caractérisé en ce que** le matériau de moulage est un alliage de fer.

2. Procédé selon la revendication 1, **caractérisé en ce que** le taux d'allongement du procédé EMF est supérieur à 100 S⁻¹.

3. Procédé selon la revendication 1, **caractérisé en ce que** le taux d'allongement du procédé EMF est supérieur à 1000 S⁻¹.

4. Procédé selon la revendication 1, **caractérisé en ce que** le taux d'allongement du procédé EMF est supérieur à 10000 S⁻¹.

5. Procédé selon l'une des revendications 1 à 4, **caractérisé en ce qu'**un assemblage par complémentarité de formes avec au moins un composant supplémentaire est réalisé par le formage du composant en un matériau de moulage.

6. Procédé selon l'une des revendications 1 à 5, **caractérisé en ce qu'**un assemblage de force avec au moins un composant supplémentaire est réalisé par le formage du composant en un matériau de moulage.

7. Procédé selon l'une des revendications précédentes, **caractérisé en ce que** le matériau de moulage possède un allongement à la rupture qui est inférieur à 20 %.

8. Procédé selon l'une des revendications précédentes, **caractérisé en ce que** le matériau de moulage possède un allongement à la rupture qui est inférieur à 15 %.

9. Procédé selon l'une des revendications précédentes, **caractérisé en ce que** le matériau de moulage possède un allongement à la rupture qui est inférieur à 10 %.

10. Procédé selon l'une des revendications précédentes, **caractérisé en ce que** le matériau de moulage possède un allongement à la rupture qui est inférieur à 5 %.

11. Procédé selon l'une des revendications précédentes, **caractérisé en ce que** la température du processus lors du formage est inférieure à 0,5*Tₘ du matériau formé.
